(19) **Europäisches Patentamt European Patent Office Office européen des brevets**

(11) **EP 3 885 565 A1**

(12) **EUROPEAN PATENT APPLICATION**
published in accordance with Art. 153(4) EPC

(43) Date of publication:
29.09.2021 Bulletin 2021/39

(51) Int Cl.:
*F02D 41/04* (2006.01)    *F02B 9/06* (2006.01)
*F02B 23/02* (2006.01)    *F02D 41/38* (2006.01)
*F02D 41/40* (2006.01)

(21) Application number: 19886081.9

(22) Date of filing: 24.10.2019

(86) International application number:
PCT/JP2019/041623

(87) International publication number:
WO 2020/105355 (28.05.2020 Gazette 2020/22)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 20.11.2018 JP 2018217400

(71) Applicant: Yanmar Power Technology Co., Ltd.
Osaka-shi
Osaka 530-0013 (JP)

(72) Inventors:
• **ASAI, Go**
Osaka-shi, Osaka 530-0013 (JP)
• **MORITA, Gin**
Osaka-shi, Osaka 530-0013 (JP)
• **MATSUKI, Kazuya**
Osaka-shi, Osaka 530-0013 (JP)

(74) Representative: **Dennemeyer & Associates S.A.**
**Postfach 70 04 25**
**81304 München (DE)**

(54) **SUBCHAMBER DIESEL ENGINE**

(57) Provided is a subchamber diesel engine (1) having excellent thermal efficiency and capable of appropriately controlling the ignition timing of fuel supplied to a combustion subchamber. A subchamber diesel engine (1) according to the present invention comprises a main combustion chamber (14) and a combustion subchamber (10) communicated with each other by a communication hole (12), the diesel engine including: an electrically driven injector (20) for injecting fuel into the combustion subchamber (10) at a random timing; a fuel passage pipe (30) connected to a fuel inlet of the injector (20); a fuel pump (41) for supplying fuel to the fuel passage pipe (30); an engine operating state detecting means for detecting an engine operating state; and a control means (100), wherein the control means (100) performs a preliminary fuel injection (Fp) in the first half of an intake stroke, performs a main injection (Fm) during a compression stroke, and after the main injection (Fm), performs an ignition control injection (Fc) near a compression top dead center.

Fig.1

EP 3 885 565 A1

**Description**

TECHNICAL FIELD

The present invention relates to a subchamber diesel engine having a main combustion chamber and a combustion subchamber that communicates by a communication hole.

BACKGROUND ART

Conventionally, a subchamber diesel engine having a main combustion chamber and a combustion subchamber that communicates by a communication hole has been known.

A general vortex chamber type subchamber diesel engine includes a main combustion chamber formed on a piston, a combustion subchamber that communicates with the main combustion chamber by a communication hole and an injector that injects fuel into the combustion subchamber, and air enters the combustion subchamber from the main combustion chamber side through the communication hole in a compression stroke and generates a strong vortex flow in the combustion subchamber. Then, fuel is injected into the combustion subchamber where the vortex flow is generated from the injector arranged so as to face the combustion subchamber so as to form an air-fuel mixture, and compression self-ignition is performed in the vicinity of a compression top dead center so as to start combustion. Next, combustion energy of combustion gas generated in the combustion subchamber causes the combustion gas to enter the main combustion chamber from the combustion subchamber through the communication hole, completes combustion while driving the piston, and obtains power (For example, see Patent Literature 1 and Patent Literature 2).

In the subchamber diesel engine described in Patent Literature 1, in order to improve the combustion of the subchamber diesel engine, two injectors facing the combustion subchamber are arranged, and fuel is injected a first time toward a wall surface of the combustion subchamber from a latter half of an intake stroke to a first half of the compression stroke and then, second fuel is injected into the combustion subchamber from the latter half of the compression stroke to the first half of the expansion stroke so as to improve the combustion.

Further, in the subchamber diesel engine described in Patent Document 2, in order to suppress inhibition of the air-fuel mixture formation due to the preliminary injection from the injector facing the combustion subchamber, in a starting region, emission of unburned fuel and unburned gas is reduced by not performing the preliminary injection.

CITATION LIST

Patent Literature

PTL 1: Japanese Unexamined Patent Application No. Hei 7-116941
PTL 2: Japanese Patent No. 3851727

DISCLOSURE OF INVENTION

PROBLEMS TO BE SOLVED BY THE INVENTION

As described above, by performing preliminary injection in the subchamber diesel engine, so-called premixed compression self-ignition combustion, in which an air-fuel mixture is formed in advance and compression self-ignition is performed, can be performed. However, when the premixed compression self-ignition is performed, ignition timing of the fuel may be too early and thermal efficiency may be significantly lowered depending on an operation condition. Therefore, it has been proposed to delay the ignition timing by using a fuel that is difficult to be self-ignited or by lowering a compression ratio. However, changing the fuel or lowering the compression ratio of the engine leads to narrowing of the conditions for employing the engine and lowering performance of the engine, and that cannot be easily employed. Further, when the preliminary injection is performed, it is considered to finely change the injection conditions for injecting fuel into the combustion subchamber so that appropriate combustion is performed, but in the conventional subchamber diesel engine described in Patent Literature 1 and Patent Literature 2, a mechanical jerk-type fuel injection device is employed, and since fuel injection characteristics are controlled by a rotation speed of the engine, they cannot be changed freely, and optimal fuel injection control according to the operation condition cannot be implemented.

The present invention has been made in view of the above facts, and its main technical problem is to provide a subchamber diesel engine which has excellent thermal efficiency and can appropriately control the ignition timing of the fuel supplied to the combustion subchamber.

MEANS FOR SOLVING THE PROBLEMS

In order to solve the above-mentioned main technical problem, according to the present invention, provided in a subchamber diesel engine including a main combustion chamber and a combustion subchamber that communicates by a communication hole, is a subchamber diesel engine, a subchamber diesel engine including an electrically driven injector that injects fuel to the combustion subchamber at arbitrary timing, a fuel passage pipe connected to a fuel inlet of the injector, a fuel pump that supplies fuel to the fuel passage pipe, an engine operation state detector that detects the engine operation state, and a controller, in which the controller performs a preliminary injection of fuel in a first half of an intake stroke, performs a main injection during a compression stroke, and performs injection for ignition control in the vicinity of the compression top dead center, after the main injection.
A spray center axis of the fuel injected from the injector and a hole center axis of the communication hole are preferably offset. Further, a glow plug is arranged in the combustion subchamber, and when an exhaust temperature detected by the operation state detector is equal to or lower than a predetermined temperature, it is preferable that the controller does not perform the preliminary injection but operates the glow plug so as to heat the combustion subchamber.
Further, the controller controls injection start timing, an injection amount, and an injection pressure of the main injection injected from the injector on the basis of the operation state detected by the operation state detector, and it is preferable to divide the main injection into a predetermined number of times and inject the main injection in accordance with the injection amount of the main injection and the injection pressure required at that time calculated by the controller. The controller may advance injection start timing of the main injection from a top dead center side of the compression stroke to a bottom dead center side as the engine rotation speed detected by the operation state detector changes from low rotation to high rotation. Further, the injection pressure injected from the injector is preferably set between 8 MPa and 40 MPa.

EFFECT OF THE INVENTION

According to the diesel engine of the present invention, a subchamber diesel engine having excellent thermal efficiency and can appropriately control ignition timing of the fuel supplied to the combustion subchamber is provided.

BRIEF DESCRIPTION OF DRAWINGS

FIG. 1 is an overall schematic view of a subchamber diesel engine.
FIG. 2 is a conceptual diagram for explaining energization time of an injector implemented by the diesel engine shown in FIG. 1.
FIG. 3 is a diagram showing a calculation flow executed by an engine ECU.
FIG. 4 is a diagram showing a calculation flow showing main injection number calculator of the calculation flow shown in FIG. 3 more specifically.
FIG. 5 is a schematic view showing arrangement of a combustion subchamber, an injector, and a glow plug of the subchamber diesel engine shown in FIG. 1.
FIG. 6 is an explanatory diagram for explaining a process of calculating main injection start timing by the calculation flow shown in FIG. 4.

DESCRIPTION OF EMBODIMENTS

A preferred embodiment of a subchamber diesel engine configured in accordance with the present invention will be described below with reference to the accompanying drawings.

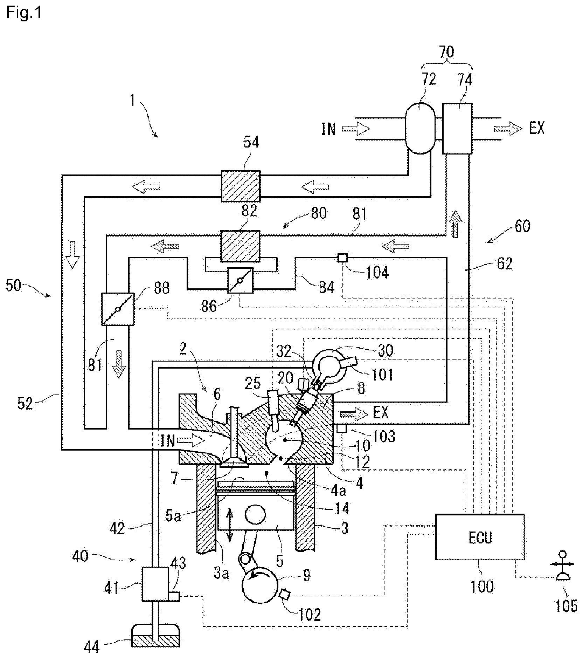

FIG. 1 shows an overall schematic view of a subchamber diesel engine 1 including a main combustion chamber and a combustion subchamber. The diesel engine 1 includes an engine main body 2, a fuel supply system 40, an intake system 50, an exhaust system 60, a supercharger 70, an EGR system 80, and controller (engine ECU) 100.
The engine main body 2 includes a cylinder block 3, a cylinder head 4, a piston 5, an intake port 6, an intake valve 7, an exhaust port 8 (indicated by a broken line), and an exhaust valve (not shown). The exhaust valve is arranged in parallel with the intake valve 7 in a direction perpendicular to the paper surface and is opened and closed together with the intake valve 7 by a valve operating mechanism, not shown.
In the cylinder head 4, a combustion subchamber 10 formed having a substantially spherical shape is formed. A main combustion chamber 14 is formed between a top surface 5a of the piston 5 sliding in a cylinder 3a and a bottom surface 4a of the cylinder head 4. The combustion subchamber 10 communicates with the main combustion chamber 14 through a communication hole 12 that is inclined with respect to a sliding direction of the piston 5 indicated by an arrow. The combustion subchamber 10 includes an injector 20 that injects fuel into the combustion subchamber 10 and a glow plug 25 that heats an inside of the combustion subchamber 10.

A fuel passage pipe 30 that accumulates fuel and supplies fuel to the injector 20 is connected to the injector 20. Fuel is supplied to the fuel passage pipe 30 by the fuel supply system 40. The fuel supply system 40 includes a fuel pump 41, a fuel supply pipe 42, a pumping amount control valve 43, and a fuel tank 44. The fuel pump 41 is driven by a crank shaft 9 of the diesel engine 1 via a power transmission mechanism, not shown, and supplies fuel sucked from the fuel tank 44 by the fuel pump 41 to the fuel passage pipe 30 via the fuel supply pipe 42. A pumping amount control valve 43 is electrically operated, has a function of controlling the amount of fuel sucked by the fuel pump 41 to be released to the fuel tank side, and can adjust the fuel amount to be supplied from the fuel pump 41 to the fuel passage pipe 30.

Although not shown, the diesel engine 1 is a so-called multicylinder engine including a plurality of cylinders 3a, and the plurality of cylinders 3a are arranged in series with the cylinder block 3. The combustion subchamber 10 is formed correspondingly to each cylinder 3a, and the injector 20 and the glow plug 25 are provided for each of the combustion subchambers 10. Each injector 20 is connected to the common fuel passage pipe 30 and injects fuel into the combustion subchamber 10 with a fuel pressure accumulated in the fuel passage pipe 30. That is, the fuel pressure in the fuel passage pipe 30 becomes the injection pressure when the fuel is injected from the injector 20 into the combustion subchamber 10. The injector 20 is a so-called internally open valve type injector, an operation of which is electrically driven by an electromagnetic solenoid, not shown, and can inject fuel at arbitrary timing on the basis of an electric signal sent to the injector 20. The fuel passage pipe 30 is a tubular member extending in a direction perpendicular to the paper surface in FIG. 1, and an injector mounting boss 32 into which a fuel inlet of the injector 20 is inserted is formed. The injector mounting bosses 32 are formed at equal intervals in an axial direction of the fuel passage pipe 30 in accordance with the number of injectors 20 to be mounted.

The intake system 50 introduces air (outside air) into the intake port 6 of the diesel engine 1. The intake system 50 includes an intake passage 52, and the intake passage 52 includes a compressor 72 of a supercharger 70 and an intake cooler (intercooler) 54. The intake passage 52 may include an intake control valve that adjusts the intake amount.

The exhaust system 60 exhausts the exhaust gas discharged from the diesel engine 1 to the outside of the diesel engine 1. An exhaust system 60 includes an exhaust passage 62. The exhaust passage 62 includes a turbine 74 of the supercharger 70. The exhaust passage 62 is connected to the exhaust port 8 of the diesel engine 1.

The EGR system 80 includes an EGR passage 81 that introduces a part of the exhaust gas flowing through the exhaust passage 62 as EGR gas into the intake port 6 of the diesel engine 1. An upstream end of the EGR passage 81 is connected to the exhaust passage 62. A downstream end of the EGR passage 81 is connected to an upstream side of the intake port 6 of the intake passage 52. The EGR passage 81 includes an EGR gas cooler 82 that cools the EGR gas. In the EGR passage 81, a cooler bypass passage 84 for bypassing the EGR gas cooler 82 and allowing the EGR gas to flow to the intake passage 52 side is provided. The cooler bypass passage 84 includes a bypass amount adjustment valve 86 that adjusts the amount of EGR gas to be bypassed. An EGR gas amount adjustment valve 88 is provided on the downstream side (intake passage 52 side) of the EGR gas cooler 82 in the EGR passage 81. By controlling an opening degree of the EGR gas amount adjustment valve 88, the amount of EGR gas introduced into the intake port 6 via the intake passage 52 can be adjusted.

The diesel engine 1 includes an engine ECU 100 as controller that controls the entire diesel engine 1. The engine ECU 100 is constituted by a computer and includes a central processing unit (CPU) that performs arithmetic processing in accordance with a control program, a read-only memory (ROM) that stores a control program and the like, a readable/writable random access memory (RAM) that temporarily stores detected detection values, arithmetic results and the like, an input interface, and an output interface (details are not shown).

The engine ECU 100 detects the operation state of the diesel engine 1, and in response to the detected operation state, it controls the injection timing, an injection pressure, an injection amount, a number of injections of the fuel supplied from the injector 20 to the combustion subchamber 10, an EGR gas amount introduced into the intake port and the like in accordance with a control program stored in advance in the ROM.

The engine operation state detector that detects the operation state of the diesel engine 1 described above will be described. As shown in FIG. 1, the engine operation state detector can be configured by including various sensors. As the various sensors, for example, a fuel passage pipe pressure sensor 101 that detects a pressure of the fuel accumulated in the pipe of the fuel passage pipe 30, a crank angle sensor 102 that detects an angular position of a crank shaft 9, an exhaust temperature sensor 103 that detects an exhaust gas temperature (for example, a temperature inside an exhaust manifold) discharged from the exhaust port 8, an EGR gas temperature sensor 104 that branches from the exhaust passage 62 and detects a temperature of the exhaust gas introduced into the EGR passage 81, and an accelerator lever opening degree sensor 105 can be included. The various sensors described above are connected to the engine ECU 100, and the values detected by the various sensors are input to the engine ECU 100. The engine ECU 100 also calculates a reference angle position of a reference cylinder and an engine rotation speed on the basis of a signal from the crank angle sensor 102. In addition to the various sensors described above, the diesel engine 1 includes the other various sensors such as an intake amount sensor that detects an actual intake amount sucked into the intake port 6, an intake pressure sensor that detects a pressure in the intake port 6, an atmospheric pressure sensor that detects an atmospheric pressure, and a cooling water temperature sensor (not shown). Further, the operation state detector may separately include a reference position sensor that detects the reference angle position of the reference cylinder and an engine rotation speed sensor that detects the engine rotation speed, in addition to the crank angle sensor 102. Further, the operation state detector also includes a calculator that calculates an estimated value of the operation state by a control program stored in the engine ECU 100.

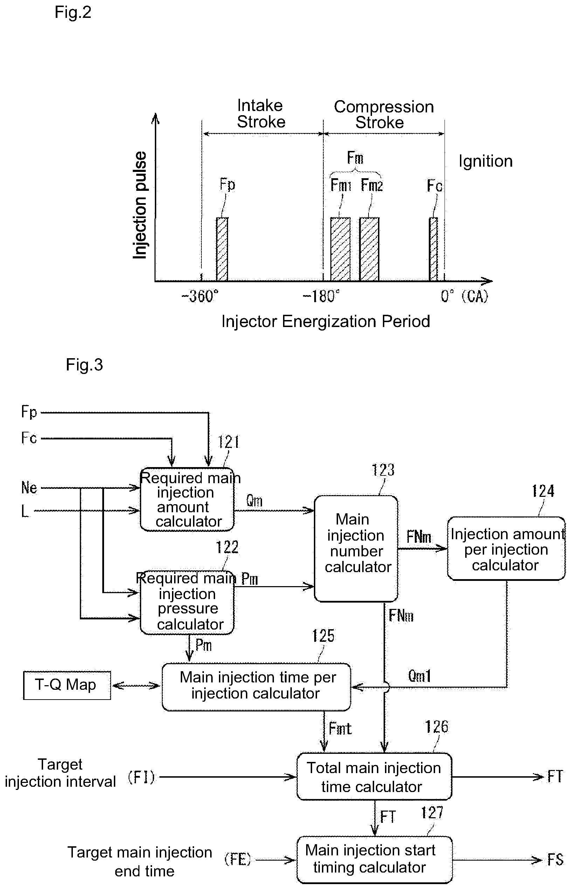

The operation of the engine ECU 100 will be described with reference to FIGS. 2 to 6. The engine ECU 100 appropriately calculates the injection amount, injection pressure, injection start timing, and number of injections of fuel to be injected from the injector 20 on the basis of the operation state detected by the above-mentioned operation state detector. Then, as shown in FIG. 2, a preliminary injection Fp of fuel is performed in a first half of an intake stroke, a main injection Fm is performed during a compression stroke, and after the main injection Fm, an ignition control injection Fc is performed in the vicinity of a compression top dead center. In FIG. 2, a vertical axis indicates generation of an injection pulse for driving the injector 20, and a horizontal axis indicates an energization period to the injector 20 indicated by a crank angle (CA) with respect to the compression top dead center (0°) as a reference. This energization period corresponds to an injection period in which fuel is injected from the injector 20 into the combustion subchamber 10. The fuel injection control of the present embodiment will be described in more detail below.

FIG. 3 shows a calculation flow executed by the engine ECU 100. The engine ECU 100 calculates an injection amount of the main injection by inputting a required load L considering an engine rotation speed Ne detected by the crank angle sensor 102, a lever opening degree of the accelerator lever opening degree sensor 105, a work load applied to the diesel engine 1 and the like into required main injection amount calculator 121 and by subtracting a preliminary injection Fp and the fuel amount supplied by the ignition control injection Fc from the total injection amount required by the diesel engine 1 and outputs it as the required main injection amount Qm. The injection amount injected by the preliminary injection Fp and the ignition control injection Fc may be fixed values or values that are increased or decreased depending on the operation state. In any case, the required main injection amount Qm is set to be a relatively large value with respect to the injection amount performed by the preliminary injection Fp and the ignition control injection Fc.

Further, in parallel with the above-mentioned required main injection amount calculator 121, the engine rotation speed Ne and the required load L are input also to required main injection pressure calculator 122, and the injection pressure of the main injection required by the diesel engine 1 is output as the required main injection pressure Pm. When the required load L is low and when the engine rotation speed Ne is low, the required main injection pressure Pm is set to be reduced, and conversely, when the required load L is high and the engine rotation speed Ne is high, it is set to be high by a map or the like (not shown). When the required main injection pressure Pm is output, the required main injection pressure Pm is set as a target fuel pressure of the fuel passage pipe 30, and the pumping amount control valve 43 of the fuel pump 41 is controlled on the basis of a detection value of the fuel passage pipe pressure sensor 101 installed in the fuel passage pipe 30. As a result, the pressure in the fuel passage pipe 30 is always adjusted within a predetermined range in the vicinity of the required main injection pressure Pm.

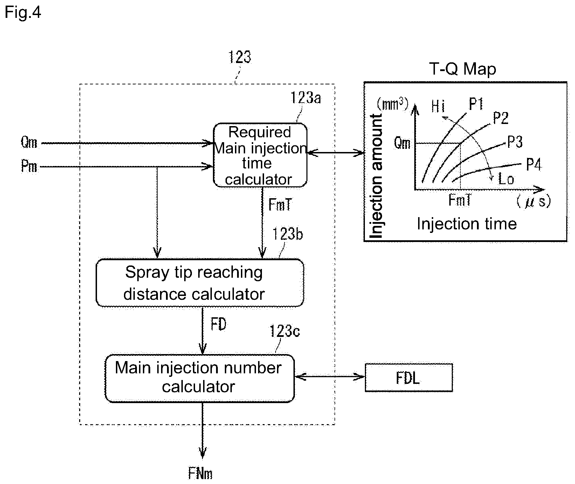

After calculating the required main injection amount Qm and a required main injection pressure Pm, the required main injection amount Qm and the required main injection pressure Pm are then input to main injection number calculator 123, and a main injection number FNm for injection by dividing the main injection Fm into a predetermined number of times is calculated. A specific calculation flow of the main injection number calculator 123 will be described more specifically with reference to FIG. 4

As shown in FIG. 4, the required main injection amount Qm and the required main injection pressure Pm input to the main injection number calculator 123 are first input to required main injection time calculator 123a. The required main injection time calculator 123a refers to a T-Q map as shown on the right side of the figure. The T-Q map is recorded in the engine ECU 100 in advance and is a map for specifying the energization time of the injector 20 set in accordance with the injection amount ($mm^3$) injected from the injector 20 and the pressure (PI to P4: MPa) of the fuel passage pipe 30, that is, the injection time ($\mu s$) and is set by an experiment or the like. On the basis of the input required main injection amount Qm and required main injection pressure Pm (for example, it is assumed that Pm = P2.), by referring to the T-Q map, injection time for realizing the required main injection amount Qm under the required main injection pressure Pm, that is, required main injection time FmT is acquired.

When the required main injection time FmT described above is acquired, the required main injection time FmT is input to spray tip reaching distance calculator 123b together with the required main injection pressure Pm, and a spray tip reaching distance FD of the spray injected from the injector 20 is calculated by referring to the map, not shown. The spray tip reaching distance FD is a value that increases as the required main injection pressure Pm is higher or as the required main injection time FmT is longer. Since the distance actually reached by the tip of the spray is affected by a nozzle diameter formed at the tip of the injector 20 and the shape of the nozzle, the map for acquiring the spray tip reaching distance FD is formulated by an experiment or the like for each injector 20.

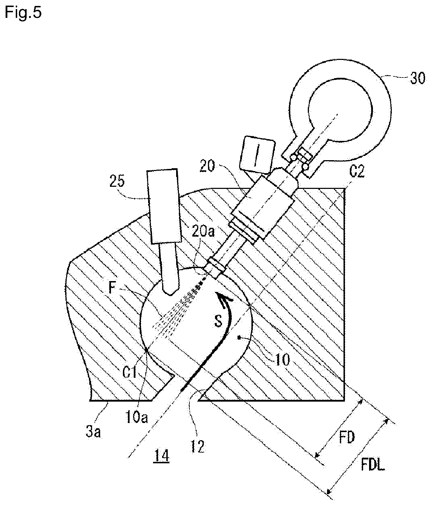

When the spray tip reaching distance FD is calculated, it is input to main injection number calculator 123c, and the main injection number FNm is calculated. Here, when the main injection number FNm is calculated by the main injection number calculator 123c, a spray tip reaching distance limit value FDL is referred to. The spray tip reaching distance limit value FDL will be described with reference to FIG. 5.

As shown in FIG. 5, fuel is injected into the combustion subchamber 10 from an injection hole 20a formed at the tip portion of the injector 20. At this time, when spray F formed by the fuel reaches a wall surface 10a of the combustion subchamber 10 and adheres thereto, the adhering fuel cannot be sufficiently evaporated by the time when compression self-ignition occurs in the vicinity of the compression top dead center, and there is a concern that it will not be burned favorably. Therefore, as a reference for determining whether or not the spray tip reaching distance FD of the fuel injected from the injector 20 reaches the wall surface 10a of the combustion subchamber 10, the distance from the tip portion of the injector 20 to the wall surface 10a of the facing combustion subchamber 10 is set as the spray tip reaching distance limit value FDL. The spray tip reaching distance limit value FDL is not necessarily limited to use of the distance from the tip portion of the injector 20 to the wall surface 10a of the facing combustion subchamber 10 as it is. Considering an influence on combustion when the spray F adheres to the wall surface 10a of the combustion subchamber 10, the value may be set to a value slightly smaller than the distance from the tip portion of the injector 20 to the wall surface 10a of the facing combustion subchamber 10 or to a value slightly larger.

By comparing the spray tip reaching distance limit value FDL set as described above with the spray tip reaching distance FD, if the spray tip reaching distance FD is smaller than the spray tip reaching distance limit value FDL, with one injection of the required main injection amount Qm, the fuel injected from the injector 20 does not reach the wall surface of the combustion subchamber 10 and thus, the main injection number FNm is set to one. Further, if the spray tip reaching distance FD is equal to or larger than the spray tip reaching distance limit value FDL, the spray F reaches the wall surface 10a of the combustion subchamber 10 when the main injection number FNm is injected once. Therefore, the main injection number FNm is set to a predetermined plurality of number of times so that the main injection Fm injected from the injector 20 becomes a multi-stage injection, and the required main injection amount Qm is divided in accordance with the number of divisions. The specific number of times to which the main injection number FNm is set can be determined by how much the spray tip reaching distance FD exceeds the spray tip reaching distance limit value FDL, but it may be confirmed by whether the tip of the spray F does not reach the wall surface of the combustion subchamber 10 by calculating injection time per injection with reference to the T-Q map on the basis of the fuel injection amount to be injected per injection, by calculating the spray tip reaching distance FD again each time it is increased to twice, three times and more, and by comparing it with the spray tip reaching distance limit value FDL. Further, even though the required main injection amount Qm is the maximum value that can be theoretically taken, if it is known that the tip of the spray F does not reach the wall surface of the combustion subchamber 10 by dividing it into two injections, when it is determined that the spray tip reaching distance FD is equal to or larger than the spray tip reaching distance limit value FDL, the main injection number FNm only needs to be set to 2. As described above, the main injection number calculator 123 outputs the predetermined number of times (main injection number FNm) when the main injection Fm is injected.

Returning to FIG. 3, the description will be continued. If the main injection number FNm is calculated by the main injection number calculator 123, the fuel injection amount Qm1 per injection when the main injection is performed in multiple stages is calculated by the injection amount per injection calculator 124. A fuel injection amount Qm1 per injection is obtained by dividing the required main injection amount Qm by the main injection number FNm. When the fuel injection amount Qm1 per injection is calculated, it is input to main injection time calculator 125 per injection together with the required main injection pressure Pm, and the main injection time Fmt per injection is calculated by referring to the above-mentioned T-Q map.

When the main injection time Fmt per injection is calculated, it is input to total main injection time calculator 126 together with the previously calculated main injection number FNm per injection, and total main injection time FT from start of the main injection Fm to completion of all the main injections is calculated with reference to target injection interval FI. For example, the total main injection time FT when the main injection number FNm is 2 is calculated as follows.

$$\text{Total main injection time FT} = \text{Main injection time Fmt per injection} \times 2 + \text{Target injection interval FI}$$

As a matter of course, when the main injection number FNm is 1, the target injection interval FI does not have to be considered, and the main injection time Fmt per injection becomes the total main injection time FT as it is. The target injection interval FI described above is determined by considering the minimum interval that should be opened in order to operate the injector 20 and to inject fuel in accordance with the T-Q map, but this is not limiting, and in addition to the interval that should be opened at the minimum, the interval may be increased or decreased depending on the operation condition.

As described above, when the total main injection time FT is calculated, it is input to main injection start timing calculator 127, and main injection start timing FS is calculated as injection start timing of the main injection Fm by referring to target main injection end timing FE. Procedures for calculating the main injection start timing FS will be described below.

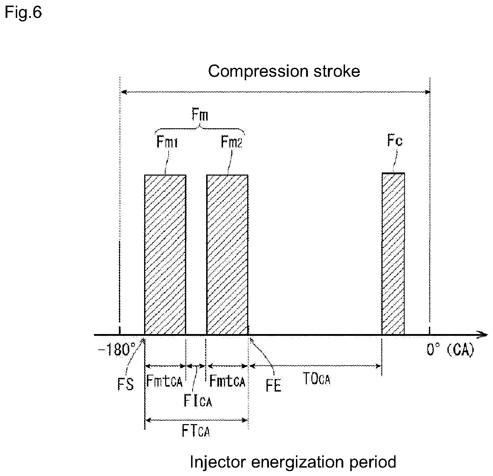

Incidentally, as described above, the total main injection time FT is calculated on the basis of the time ($\mu$s). On the other hand, control of the fuel injection timing of the injector 20 is executed on the basis of the crank angle (CA) detected by the crank angle sensor 102. Therefore, when the main injection start timing FS is calculated, it is necessary to convert it into a crank angle and set it. With regard to the above, procedures for calculating the main injection start timing FS while converting it into a crank angle will be described with reference to FIG. 6. In FIG. 6, the crank angle (CA) is shown on the horizontal axis, the preliminary injection Fp performed in an intake stroke is omitted, and only the main injection Fm performed during the compression stroke and a pulse of the ignition control injection Fc are shown.

As the engine rotation speed Ne changes from low to high, an average speed of the piston 5 increases, and the time required for one cycle changes and decreases. On the other hand, as described above, the time required to inject all the required main injection amount Qm, that is, the total main injection time FT ($\mu$s) is not directly affected by the engine rotation speed Ne but depends on the required main injection pressure Pm and the required main injection amount Qm. Further, the fuel injection performed in the present embodiment is premised on performance of the preliminary injection Fp, the main injection Fm, and the ignition control injection Fc, and the main injection Fm needs to be completed at the target main injection end timing FE before the injection start timing of the ignition control injection Fc performed at the compression self-ignition timing in the vicinity of the compression top dead center only predetermined time T0. This predetermined time T0 is time set also by considering time during which the main injection Fm is sufficiently mixed with a vortex flow S of air (see FIG. 5) introduced into the combustion subchamber 10 in the combustion subchamber 10, in addition to the target injection interval FI described above. In this way, the target main injection end timing FE that goes back only by the predetermined time T0 is set with the injection start timing of the ignition control injection Fc as a reference. Here, the injection start timing of the ignition control injection Fc is defined with the crank angle as a reference. Therefore, a predetermined period $T0_{CA}$ obtained by converting the predetermined time T0 per crank angle (CA) is acquired. The predetermined period $T0_{CA}$ is a value that increases when the engine rotation speed Ne increases and decreases when the engine rotation speed decreases, even if the predetermined time T0 is constant. In this way, as shown in FIG. 6, timing that goes back only by $T0_{CA}$ from the injection start timing of the ignition control injection Fc is set as the target main injection end timing FE. When the target main injection end timing FE is to be set, the injection start timing of the ignition control injection Fc does not necessarily have to be made a reference, and it may be determined with the compression top dead center (0°) as the reference as long as the injection start timing of the ignition control injection Fc is changed only within a small range in the vicinity of the compression top dead center.

As described above, when the target main injection end timing Fe is set by the crank angle, the timing that goes back from the target main injection end timing FE only by the total main injection time FT is calculated as the main injection start timing FS so that the main injection Fm is completed at this target main injection end timing FE. As described above, since the total main injection time FT is also calculated by the time, the total main injection time FT is converted per crank angle (CA) similarly to the predetermined time T0 described above, and the total main injection period $FT_{CA}$ is calculated. After calculating the total main injection period $FT_{CA}$, the timing that goes back from the target main injection end timing FE only by the above-mentioned total main injection period $FT_{CA}$ is calculated as the main injection start timing FS. By the above procedure, the main injection start timing FS is determined by the crank angle.

The target main injection end timing FE is set by the crank angle by the calculator of the above-mentioned main injection start timing FS, and the timing that goes back from the target main injection end timing FE only by the total main injection time FT is calculated as the main injection start timing FS so that the main injection Fm is completed at this target main injection end timing FE. Therefore, as the engine rotation speed Ne changes from low rotation to high rotation, the main injection start timing FS of the main injection Fm is advanced from the top dead center side to the bottom dead center side of the compression stroke.

When the diesel engine 1 is actually operated, the first time of injection of the main injection Fm1 of the divided main injection Fm is started at the above-mentioned main injection start timing FS. An injection period of the first main injection Fm1 is a main injection period $Fmt_{CA}$ per injection obtained by converting the main injection time Fmt per injection calculated by the above-mentioned main injection time per injection calculator 125 to a crank angle corresponding to the engine rotation speed Ne. Then, when the injection is performed only for the main injection period $Fmt_{CA}$ per injection and is completed, an interval is opened only by the target injection interval FI until the injection of second main injection Fm2 is started. At this time, since the target injection interval FI is also set by time, a target injection interval $FI_{CA}$ obtained by converting the target injection interval FI to a crank angle is calculated in accordance with the engine rotation speed Ne, and after the interval is opened only by the target injection interval $FI_{CA}$, the second main injection Fm2 is performed with a main injection period $Fmt_{CA}$ per injection. The main injection Fm performed in this way is completed at the target main injection end timing FE, as shown in FIG. 6. Then, after the predetermined period $T0_{CA}$, the ignition control injection Fc is performed so as to satisfy the ignition conditions, and premixed compression self-ignition combustion in which the ignition timing is appropriately controlled is realized with high thermal efficiency.

As shown in FIGS. 1 and 5, a glow plug 25 is arranged in the combustion subchamber 10 of the diesel engine 1 in the present embodiment. When the engine ECU 100 determines that the diesel engine 1 is at a low-temperature start or in a warm-up mode after the low-temperature start on the basis of the exhaust temperature detected by the exhaust temperature sensor 103 arranged as the operation state detector, even when the preliminary injection Fp is performed in the operation state specified by the engine rotation speed Ne and the required load L, the preliminary injection Fp is not performed, but the glow plug 25 is operated so as to heat the combustion subchamber 10. At this time, the fuel set as the preliminary injection Fp is added to the required main injection amount Qm of the main injection Fm. Further, when it is determined to be the low temperature state, only the preliminary injection Fp may be prohibited and the main injection Fm and the ignition control injection Fc may be performed, but normal diffusion combustion may be performed in which the premixed compression self-ignition combustion is stopped, and all the fuel is injected in the vicinity of the compression top dead center. As a result, the problem that the fuel injected in the combustion subchamber 10 is not sufficiently evaporated due to the low temperature of the diesel engine 1 and uniform premix cannot be formed is avoided, and an increase of the unburned HC contained in the exhaust gas is prevented.

In the present embodiment, as shown in FIG. 5, a center axis C1 of the fuel spray F injected from the injector 20 and a hole center axis C2 of the communication hole 12 are offset. With such an arrangement, even if fuel is injected from the injector 20 in the intake stroke and in the first half of the compression stroke, the fuel does not easily leak to the main combustion chamber 14. Therefore, the fuel is prevented from adhering to the cylinder 3a and diluting the lubricating oil. Further, the fuel is mixed in the combustion subchamber 10 to a level sufficient for premixed compression self-ignition by the vortex flow S by the air flowing from the main combustion chamber 14 into the combustion subchamber 10 as the piston 5 rises.

In the present embodiment, the EGR system 80 that recirculates the exhaust gas from the exhaust system 80 to the intake system 50 is arranged, and the exhaust gas can be supplied to the intake passage 52 depending on the operation state. As a result, the emission of nitrogen oxides contained in the exhaust gas is reduced, and when premixture is formed by the preliminary injection Fp and the main injection Fm and the compression self-ignition is performed in the vicinity of the compression top dead center, the ignition timing can be favorably controlled by preventing premature ignition by throwing in the EGR gas and the like.

The subchamber diesel engine 1 of the present embodiment sets the injection pressure of the fuel injected from the injector 20 within the range of 8 MPa to 40 MPa, or more preferably within the range of 15 MPa to 25 MPa. With the subchamber diesel engine 1, desired combustion performance can be obtained even in the injection pressure range as above. That is, since the injection pressure can be set to be much lower than that of the recent direct injection diesel engine whose maximum injection pressure exceeds 200 MPa, it is not necessary to make the structure of the injector 20 itself excessively robust, and a system for injecting fuel can be simply configured by using the injector 20 that can be electrically driven from the fuel passage pipe 30, and a manufacturing cost can be kept low.

DESCRIPTION OF REFERENCE NUMERALS

1 Diesel engine
2 Engine main body
3 Cylinder block
4 Cylinder head
5 Piston
5a Piston top surface
6 Intake port
7 Intake valve
8 Exhaust port
9 Crank shaft
10 Combustion subchamber
12 Communication hole
14 Main combustion chamber
20 Injector
25 Glow plug
30 Fuel passage pipe
40 Fuel supply system
41 Fuel pump
42 Fuel supply pipe
43 Pumping amount control valve
44 Fuel tank
50 Intake system

52 Intake passage
54 Intake cooler (intercooler)
60 Exhaust system
62 Exhaust passage
70 Supercharger
72 Compressor
74 Turbine
80 EGR system
81 EGR passage
82 EGR gas cooler
84 Cooler bypass passage
86 Bypass amount adjustment valve
88 EGR gas amount adjustment valve
100 Controller
101 Fuel passage pipe pressure sensor
102 Crank angle sensor
103 Exhaust temperature sensor
104 EGR gas temperature sensor
105 Accelerator lever opening degree sensor
Ne: Engine rotation speed
L: Required load
Fp: Preliminary injection
Fm: Main injection
Fc: Ignition control injection
Qm: Required main injection amount
Qm1: Fuel injection amount per injection
Pm: Required main injection pressure
FNm: Main injection number
FmT: Required main injection time
Fmt: Main injection time per injection
FD: Spray tip reaching distance
FDL: Spray tip reaching distance limit value
FI: Target injection interval
FT: Total main injection time
FS: Main injection start timing
FE: Target main injection end timing

**Claims**

1. A subchamber diesel engine including a main combustion chamber and a combustion subchamber that communicates by a communication hole, comprising:

   an electrically driven injector that injects fuel into the combustion subchamber at arbitrary timing,
   a fuel passage pipe connected to a fuel inlet of the injector,
   a fuel pump that supplies fuel to the fuel passage pipe,
   an engine operation state detector that detects an engine operation state, and
   a controller, wherein
   the controller performs a preliminary injection of fuel in a first half of an intake stroke, performs a main injection during a compression stroke, and performs an ignition control injection in the vicinity of a compression top dead center, after the main injection.

2. The subchamber diesel engine according to claim 1, wherein a spray center axis of fuel injected from the injector and a hole center axis of the communication hole are offset.

3. The subchamber diesel engine according to claim 1 or 2, wherein a glow plug is arranged in the combustion subchamber, and when an exhaust temperature detected by the operation state detector is equal to or lower than a predetermined temperature, the controller does not perform the preliminary injection but operates the glow plug and heats the combustion subchamber.

4. The subchamber diesel engine according to any one of claims 1 to 3, wherein the controller controls injection start timing, an injection amount, and an injection pressure of the main injection injected from the injector on the basis of the operation state detected by the operation state detector and divides the main injection into a predetermined number of times and performs injection in accordance with the injection amount of the main injection calculated by the controller and the injection pressure required at that time.

5. The subchamber diesel engine according to any one of claims 1 to 4, wherein the controller advances the injection start timing of the main injection from a top dead center side of the compression stroke to a bottom dead center side as an engine rotation speed detected by the operation state detector changes from low rotation to high rotation.

6. The subchamber diesel engine according to any one of claims 1 to 5, wherein an injection pressure injected from the injector is set between 8 MPa and 40 MPa.

Fig.1

Fig.2

Fig.3

Fig.4

Fig.5

Fig.6

<table>
<tr><td colspan="2" align="center">**INTERNATIONAL SEARCH REPORT**</td><td>International application No.<br>PCT/JP2019/041623</td></tr>
</table>

**A. CLASSIFICATION OF SUBJECT MATTER**

Int.Cl. F02D41/04(2006.01)i, F02B9/06(2006.01)i, F02B23/02(2006.01)i, F02D41/38(2006.01)i, F02D41/40(2006.01)i

According to International Patent Classification (IPC) or to both national classification and IPC

**B. FIELDS SEARCHED**

Minimum documentation searched (classification system followed by classification symbols)

Int.Cl. F02D41/04, F02B9/06, F02B23/02, F02D41/38, F02D41/40

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 3-115723 A (ISUZU MOTORS LTD.) 16 May 1991, page 3, upper left column, line 10 to page 4, lower left column, line 20, fig. 1-4 & US 5070833 A, column 4, line 6 to column 6, line 8, fig. 1-4 & EP 420456 A1 | 1-6 |
| Y | JP 2000-54904 A (KUBOTA CORPORATION) 22 February 2000, paragraphs [0011]-[0018], fig. 1, 2 (Family: none) | 1-6 |
| Y | JP 2000-328974 A (ISUZU CERAMICS RES INST CO., LTD.) 28 November 2000, abstract, paragraphs [0017]-[0028], fig. 1-6 (Family: none) | 1-6 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09.12.2019 | 24.12.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 885 565 A1**

**INTERNATIONAL SEARCH REPORT**

International application No.

PCT/JP2019/041623

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-328973 A (KAWAMURA, Hideo) 28 November 2000, paragraphs [0008], [0020]-[0038], fig. 1-5 (Family: none) | 1-6 |
| Y | JP 9-317471 A (ISUZU CERAMICS RES INST CO., LTD.) 09 December 1997, abstract, paragraphs [0018]-[0029], fig. 1-4 & US 5727519 A, column 7, line 51 to column 12, line 16, fig. 1-7 & EP 809003 A2 & CN 1166569 A | 1-6 |
| Y | JP 6-33816 A (MAZDA MOTOR CORP.) 08 February 1994, paragraphs [0010]-[0020], fig. 1-3 (Family: none) | 2-6 |
| Y | JP 58-51232 A (NISSAN MOTOR CO., LTD.) 25 March 1983, page 1, lower right column, lines 3-17, fig. 1 (Family: none) | 2-6 |
| Y | JP 2001-193526 A (MAZDA MOTOR CORP.) 17 July 2001, claims 1-2, paragraphs [0019]-[0070], fig. 1-12 (Family: none) | 4-6 |
| Y | JP 9-217624 A (ISUZU CERAMICS RES INST CO., LTD.) 19 August 1997, claim 5, paragraphs [0010], [0020], fig. 1-3 (Family: none) | 6 |
| Y | JP 9-158730 A (ISUZU CERAMICS RES INST CO., LTD.) 17 June 1997, paragraphs [0022], [0031], fig. 1 (Family: none) | 6 |

Form PCT/ISA/210 (continuation of second sheet) (January 2015)

**EP 3 885 565 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI7116941 A
- JP 3851727 B